# EUROPÄISCHE PATENTANMELDUNG

(11) **EP 2 034 326 A1**
(43) Veröffentlichungstag der Anmeldung: **11.03.2009**
(21) Anmeldenummer: 08015505.4
(22) Anmeldetag: 03.09.2008
(51) Int. Cl.: G01S 1/00

(54) **Regionales Satellitenpositionierungs-ergänzungssystem**

(30) Priorität: 04.09.2007 DE 102007041772
(71) Anmelder: Astrium GmbH, 81663 München (DE)
(72) Erfinder: Trautenberg, Hans L., Dr., 85521 Ottobrunn (DE)

(57) **Zusammenfassung**

Die Erfindung betrifft eine Vorrichtung eines Navigationssatelliten eines Satellitenpositionierungsergänzungssystem umfassend eine Einrichtung zur Erzeugung eines Navigationssignals, wobei die Signalstärke des Navigationssignals so bemessen ist, dass der Empfang von Signalen anderer Satellitennavigationssysteme immer noch möglich ist.

## Beschreibung

Die Erfindung betrifft ein regionales Satellitenpositionierungsergänzungssystem.

Navigationssysteme sind in ihrer Genauigkeit unter anderem durch eine mangelnde Modellierung der atmosphärischen Signalausbreitung limitiert. Die Kontinuität von Navigationssystemen wird durch die zeitliche und räumliche Nichtverfügbarkeit von Signalen auf bestimmenden Frequenzen von bestimmten Signalquellen negativ beeinflusst.

Im Stand der Technik gibt es Zweifrequenzsysteme, die die ionosphärischen Ausbreitungseffekte beim Benutzer messbar machen, doch leidet die Verfügbarkeit und Kontinuität unter der Tatsache, dass es nun notwendig ist, beide Signale zu empfangen, um eine Messung durchzuführen. Zudem sind nach dem Stand der Technik regionale Ausbreitungsmodelle für die lonosphäre bekannt, in welchen die lonosphäre als eine Ebene in einer bestimmten Höhe modelliert wird, und die ionosphärische Laufzeitveränderung durch die lonosphäre durch Interpolation von ionosphärischen Parametern zwischen zweidimensionalen Gitterpunkten auf dieser Ebene und den Durchdringungswinkel des Signals durch diese Ebene modelliert wird.

Für die troposphärische Ausbreitungsmodellierung gibt es nach dem Stand der Technik lokale Systeme, die unter dem Sammelbegriff "Differentielles GPS" in der Literatur bekannt sind. Doch erfordern die üblichen differentiellen Verfahren aufgrund der hohen benötigten Datenraten eine quasi-direkte Sichtbarkeit der Stellen, die die differentiellen Korrekturen verbreiten. Es ist also ein relativ dichtes Netzwerk von Stellen, die diese Korrekturen verbreiten notwendig. Solche Systeme sind sehr gut geeignet die Genauigkeit lokal zu steigern, doch für eine Genauigkeitssteigerung in Gebieten von der Größe Deutschlands sind solche Systeme nur mit sehr hohem Aufwand für Bodengebundene Nutzer aufzubauen.

Es ist eine Aufgabe der Erfindung eine Vorrichtung und ein Verfahren zu beschreiben, welche eine bessere Positionslösung ermöglicht. Dabei kann besser bedeuten, eine bessere Genauigkeit zu erzielen, und/oder eine bessere Kontinuität der Positionslösung bereitzustellen, und/oder eine bessere Verfügbarkeit der Positionslösung bereitzustellen, und/oder eine bessere Integrität der Positionslösungslösung bereitzustellen.

Die Aufgabe wird gelöst durch eine Vorrichtung nach Anspruch 1 und ein Verfahren nach Anspruch 7. Weitere vorteilhafte Ausgestaltungen der Erfindung finden sich in den Unteransprüchen.

Ein Vorteil der Erfindung ist, dass durch die Bereitstellung einer genaueren Modellierung der Signalausbreitung durch das Satellitenpositionierungsergänzungssystem eine Genauigkeitssteigerung der Positionslösung des Navigationssystems erreicht wird.

Ein weiterer Vorteil der Erfindung ist, dass die zweite Frequenz Satellitenpositionierungsergänzungssystem als auch des Navigationssystems nun zur Steigerung der Kontinuität und/oder Verfügbarkeit verwendet werden kann, weil sie nicht mehr für die Modellierung der Signalausbreitung zur Genauigkeitssteigerung notwendig ist.

Ein weiterer Vorteil der Erfindung ist, dass durch die Bereitstellung von genaueren Modellen und Modellparametern für die Signalausbreitung in der Atmosphäre die Integrität, und/oder Kontinuität und/oder Verfügbarkeit der Positionslösung verbessert wird.

Ein weiterer Vorteil der Erfindung ist, dass durch die Bereitstellung der Systemzeit des Navigationssystems, welches das Satellitenpositionierungsergänzungssystem ergänzt, durch die Signale und Nachrichten des Satellitenpositionierungsergänzungssystem die Signal des Navigationssystems, welches das Satellitenpositionierungsergänzungssystem ergänzt, unter ungünstigeren Umständen empfangbar werden, bzw. genauer empfangbar werden, was wieder die Genauigkeit, Kontinuität und Verfügbarkeit steigert. Dieser Effekt kann noch durch die optionale Bereitstellung der Daten, die den Signalen des Navigationssystems aufgeprägt sind, durch die Signale des Satellitenpositionierungsergänzungssystems noch verstärkt werden.

Gemäß einer Ausführungsform beschreibt die Erfindung eine Vorrichtung für Satellitenpositionierungsergänzungssystem zur Modellierung der Signalausbreitung von Navigationssignalen. Die Navigationssatelliten des Satellitenpositionierungsergänzungssystem, die sich über einem Gebiet befinden, in dem ein Dienst bereitgestellt werden soll, befinden sich nahe am Zenit und senden ein relativ starkes Navigationssignal in das Dienstgebiet aus. Dabei wird erfindungsgemäß die Größe des Dienstgebietes so gewählt, dass genug Energie in den Satelliten des Satellitenpositionierungsergänzungssystem vorhanden ist, um die erforderliche Signalstärke zu erreichen. Alternativ wird bei einem fest vorgegeben Dienstgebiet der Satellit so ausgelegt, dass so viele Energie im Satelliten vorhanden ist, dass die erforderliche Signalstärke erreicht wird.

Diese Satelliten können zum Beispiel auf geneigten erdsynchronen Bahnen, auf erdsynchronen Bahnen in oder nahe der Äquatorebene, oder auch auf so genannten Molniya-Bahnen fliegen.

Typischerweise sind diese Satelliten des Satellitenpositionierungsergänzungssystem mit einer (hoch-) gerichteten Antenne ausgerüstet, um mit möglichst geringem Energieaufwand eine möglichst hohen Signalstärke im Dienstgebiet zu erreichen, wobei die Signalstärke so bemessen ist, dass der Empfang von Signalen anderer Satellitennavigationssysteme immer noch möglich ist. Dies kann durch eine geeignete Wahl der Kodierung der Signale erreicht werden. Mit anderen Worten wird erfindungsgemäß die maximale Signalstärke abgestrahlt, welche für eine gegebene Kodierung erreicht werden kann, aber so dass darüber hinaus der Empfang von Signalen anderer Satellitennavigationssysteme immer noch möglich ist.

Zusätzlich kann gemäß einer weiteren Ausführungsform die Antenne so nachgeführt werden, dass eine optimale Signalstärke im Dienstgebiet möglich ist.

Die so erzeugten Navigationssignale sind deutlich stärker als normale Navigationssignale. Daher können sie unter deutlich ungünstigeren Bedingungen oder unter gleichen Bedingungen deutlich schneller oder genauer empfangen und gemessen werden.

Diese Signale haben nicht nur die Eigenschaft, dass mit ihnen Pseudolaufzeitmessungen durchgeführt werden können, sondern beinhalten auch genaue Modelle zur Modellierung der Ausbreitung von (Satelliten-) Navigationssignalen, die im Dienstgebiet empfangen werden können, und Modelle die es erlauben den Absendezeitpunkt und den Absendeort der Signale des Satellitenpositionierungsergänzungssystem in der Zeitskala des Navigationssystems zu ermitteln. Dabei kann auch ein Model übertragen werden, um den Absendezeitpunkt in der Systemzeitskala eines anderen Navigationssystems zu ermitteln.

Optional kann dann ein Benutzerempfänger den möglichen Offset zwischen der Systemzeit eines Navigationssystem und der eigenen Empfängeruhrzeit ermitteln, um vorher nicht empfangene oder auch vorher nicht empfangbare Signale zu empfangen. Signale können zum Beispiel vorher nicht empfangbar gewesen sein, weil die Empfängerzeitskala und die Systemzeitskala zu weit voneinander abgewichen hat, oder weil die Referenzfrequenz des Empfängers zu stark von der Referenzfrequenz des Systems abgewichen hat.

In einer weiteren Ausführungsform beschreibt die Erfindung eine Vorrichtung, so dass die Signale der Navigationssatelliten des Satellitenpositionierungsergänzungssystem auch noch die Benutzernachrichten, die den Signalen anderer Navigationssysteme aufgeprägt sind, wiedergeben und dadurch die Signale der anderen Navigationssysteme unter noch ungünstigeren Bedingungen oder noch genauer empfangen werden können.

In einer weiteren Ausführungsform wird dabei die lonosphäre durch mehrere Schichten in verschiedenen Höhen beschrieben, wobei die Elektronendichte an Stützstellen in jeder Schicht zusammen mit der Referenzhöhe für diese Schicht durch die Signale der Navigationssatelliten des Satellitenpositionierungsergänzungssystem den an die Benutzer übermittelt wird. Dieses lonosphärenmodell wird auf mehreren Frequenzen an die Benutzer übermittelt. Dabei wird sichergestellt dass die komplette Information auf jeder Frequenz übertragen wird, aber auf unterschiedlichen Frequenzen zu jedem Zeitpunkt ein anderer Teil der Modellparameter übertragen wird. Optional können auch auf allen Frequenzen zeitgleich die gleiche Informationen gesendet werden. Die Elektronendichte entlang der Signalausbreitungspfade wird dann durch Interpolation bestimmt. Aus dem Integral über die Elektronendichte, welche optional noch mit einer Funktion des Magnetfeldes gewichtet werden kann, wird dann die Auswirkung auf das Signal berechnet.

In einer weiteren Ausführungsform wird dabei die Troposphäre derart modelliert, dass der Luftdruck und/oder die Temperatur und/oder die absolute Luftfeuchte in Abhängigkeit von der Höhe für ausgewählte Ort im Dienstgebiet durch die Signale der Navigationssatelliten des Satellitenpositionierungsergänzungssystem den an die Benutzer übermittelt wird. Aus diesen Daten wird dann durch Interpolation der Brechungsindex der Atmosphäre entlang des Signalausbreitungsweges bestimmt, und damit die troposphärische Laufzeitverzögerung bestimmt.

Beliebige Kombinationen der obigen Ausführungsformen sind ebenfalls durch die Erfindung offenbart.

Gemäß einer weiteren Ausführungsform beschreibt die Erfindung ein Verfahren zur Modellierung der Signalausbreitung eines Navigationssignals. Dieses Verfahren umfasst einen Schritt zur Bemessung der Signalstärke des Navigationssignals so, dass der Empfang von Signalen anderer Satellitennavigationssysteme immer noch möglich ist.

In einer weiteren Ausführungsform des Verfahrens wird dabei die lonosphäre durch mehrere Schichten in verschiedenen Höhen beschrieben, wobei die Elektronendichte an Stützstellen in jeder Schicht zusammen mit der Referenzhöhe für diese Schicht durch die Signale der Navigationssatelliten des Satellitenpositionierungsergänzungssystem den an die Benutzer übermittelt wird. Dieses lonosphärenmodell wird auf mehreren Frequenzen an die Benutzer übermittelt. Dabei wird sichergestellt dass die komplette Information auf jeder Frequenz übertragen wird, aber auf unterschiedlichen Frequenzen zu jedem Zeitpunkt ein anderer Teil der Modellparameter übertragen wird. Die Elektronendichte entlang der Signalausbreitungspfade wird dann durch Interpolation bestimmt. Aus dem Integral über die Elektronendichte, welche optional noch mit einer Funktion des Magnetfeldes gewichtet werden kann, wird dann die Auswirkung auf das Signal berechnet.

In einer weiteren Ausführungsform des Verfahrens wird dabei die Troposphäre derart modelliert, dass der Luftdruck, die Temperatur und die absolute Luftfeuchte in Abhängigkeit von der Höhe für ausgewählte Ort im Dienstgebiet durch die Signale der Navigationssatelliten des Satellitenpositionierungsergänzungssystem den an die Benutzer übermittelt wird. Aus diesen Daten wird dann der Brechungsindex der Atmosphäre entlang des Signalausbreitungsweges bestimmt, und damit die troposphärische Laufzeitverzögerung bestimmt.

Die im Zusammenhang mit den Ausführungsformen der Vorrichtungen der Erfindung angegebenen Merkmale sind auch für das Verfahren offenbart.

## Patentansprüche

1. Vorrichtung eines Navigationssatelliten eines Satellitenpositionierungsergänzungssystem umfassend eine Einrichtung zur Erzeugung eines Navigationssignals, wobei die Signalstärke des Navigationssignals so bemessen ist, dass der Empfang von Signalen anderer Satellitennavigationssysteme immer noch möglich ist.

2. Vorrichtung nach Anspruch 1, wobei die Verträglichkeit der hohen Signalstärke des Signale des Satellitenpositionierungsergänzungssystem mit den Signalen anderer Navigationssysteme durch geeignete Wahl der Kodierung der Signale des Satellitenpositionierungsergänzungssystem erreicht wird.

3. Vorrichtung nach Anspruch 1 oder Anspruch 2, wobei die erzeugten Navigationssignale, die im Dienstgebiet empfangen werden können, Modelle zur Modellierung der Ausbreitung von Navigationssignalen beinhalten.

4. Vorrichtung nach Anspruch 3, wobei die Modelle es erlauben den Absendezeitpunkt und den Absendeort der Navigationssignale zu ermitteln.

5. Vorrichtung nach Anspruch 3, wobei die Modelle es erlauben den Absendezeitpunkt der Navigationssignale in der Systemskala eines anderen Navigationssystems zu ermitteln.

6. Vorrichtung nach einem der vorhergehenden Ansprüche, wobei den Navigationssignalen des Satelliten auch noch die Benutzernachrichten, die den Signalen eines anderen Navigationssystems aufgeprägt sind, wiedergeben.

7. Vorrichtung nach einem_der vorhergehenden Ansprüche, wobei die lonosphäre durch mehrere Schichten in verschiedenen Höhen beschrieben wird und die Elektronendichte an Stützstellen in jeder Schicht zusammen mit der Referenzhöhe für diese Schicht durch die Signale der Navigationssatelliten des Satellitenpositionierungsergänzungssystem den an die Benutzer übermittelt wird.

8. Vorrichtung nach Anspruch 7, wobei das lonosphärenmodell auf mehreren Frequenzen an die Benutzer übermittelt wird und zwar so, dass dabei sichergestellt wird, dass die komplette Information auf jeder Frequenz übertragen wird, aber auf unterschiedlichen Frequenzen zu jedem Zeitpunkt ein anderer Teil der Modellparameter übertragen wird und wobei die Elektronendichte entlang der Signalausbreitungspfade dann durch Interpolation bestimmt wird.

9. Vorrichtung nach einem der vorhergehenden Ansprüche, wobei die Troposphäre derart modelliert, dass der Luftdruck, die Temperatur und die absolute Luftfeuchte in Abhängigkeit von der Höhe für ausgewählte Orte im Dienstgebiet durch die Signale der Navigationssatelliten des Satellitenpositionierungsergänzungssystem den an die Benutzer übermittelt wird.

10. Verfahren zur Modellierung der Signalausbreitung eines Navigationssignals umfassend einen Schritt zur Bemessung der Signalstärke des Navigationssignals so, dass der Empfang von Signalen anderer Satellitennavigationssysteme immer noch möglich ist.
